# EUROPEAN PATENT APPLICATION

(11) **EP 4 722 921 A1**
(43) Date of publication of application: **08.04.2026**
(21) Application number: 25206785.5
(22) Date of filing: 06.10.2025
(51) Int. Cl.: G06F 11/10

(54) **CORRECTING UNCORRECTABLE ERRORS IN MEMORY DEVICES USING ERASURE CODE AND METADATA**

(30) Priority: 07.10.2024 US 202418908230
(71) Applicant: Google LLC, Mountain View, CA 94043 (US)
(72) Inventor: Aidan, Fabrice, 6789141 Tel Aviv (IL); Mulla, Amir, 6789141 Tel Aviv (IL)
(74) Representative: Betten & Resch

(57) **Abstract**

The technology is generally directed to error detection and correction in memory devices using dynamic random-access memory (DRAM) elements. Error correction codes (ECC) provide the ability to correct errors in memory elements. The ability to extend ECC capabilities to correct errors in defective elements is achievable when the location of the error(s) is known. Error correction metadata is calculated in the memory device when a write operation is performed. The metadata is stored in available space on the memory device. To locate uncorrectable errors, a pair of elements is selected and ECC is performed to recreate the data in the pair of elements. The metadata is recalculated on the recreated data and compared to the originally stored metadata. A match in metadata indicates the chosen pair contained the error. A mismatch indicates that the recreated data does not contain the error. Locating errors extends ECC correction capability.

## Description

### BACKGROUND

Day-to-day operations of enterprise organizations may generate large amounts of data, often stored in computing environments offered via the cloud (e.g., networks of servers, storage, databases, software, and other services made available by cloud platform providers). Cloud services may be hosted in various data centers located in different geographic locations. Each data center may house computing resources and networking equipment configured to receive, process, store the data transmitted to the data center, and/or transmit processed data to end user devices or other data centers.

Data centers may use dynamic random access memory devices (DRAM devices) to receive, process, store, and/or transmit data. The DRAM devices may be critical to the operations and/or functions of the data centers and, consequently, the longevity and reliability of the DRAM devices may be of tantamount importance. However, DRAM devices may be vulnerable to faults that may cause data or symbol errors when reading data from and/or writing data to the DRAM device. Faults may occur because of underlying hardware defects within the DRAM device. Faults, in some instances, may compromise the functionality and life cycle of the impacted DRAM device and ultimately, a Dual Inline Memory Module (DIMM) or other memory device that includes the impacted DRAM device. In particular, a fault may compromise how the DRAM device receives, processes, reads, writes, and/or stores the data. In some instances, faults may lead to hardware failure, software system crashes, or the like.

Current solutions to identify and correct faults may use symbol-led error correction schemes (e.g., Reed-Solomon (RS) code, array codes, or the like) to detect and correct errors caused by such faults when they are detected as a result of a DRAM memory read transaction. For example, error correction code (ECC) symbols may be added to the DRAM device (e.g., by a memory controller) to detect and correct memory errors on the DRAM device. ECC symbols may be used to correct memory errors caused by faulty I/O data pins (DQs). A portion of available DRAM device storage may be used to store the ECC symbols on the DRAM device. Therefore, a size of the DRAM device and a number of bits used to store the ECC symbols may impact the capacity of the ECC to detect and correct multiple memory errors.

Errors may be categorized as one of either a correctable error (CE) or an uncorrectable error (UE). A CE may be detected and corrected using ECC symbols stored within the DRAM device. Alternatively, when a UE is detected, it might not be correctable. An error may be considered uncorrectable if the number of available ECC symbols is insufficient (e.g., when the number of detected errors exceeds the number of ECC symbols available within the DRAM device). Therefore, current solutions for detecting and correcting faults that may lead to memory errors might not permit DRAM devices to correct a total number of UEs using the ECC.

The ECC information is added to the DRAM by a memory controller. Typically, Reed-Solomon (RS) codes are used as ECC. For example, for a DDR5 10x4 DIMM, the following RS code may be used: RS(40,32,8), which denotes:
- 8 bits per symbol;
- 32 data symbols
- 8 ECC symbols

This code has the capability to detect and correct up to 4 symbol errors with a probability of 100 percent accuracy. This scenario is referred to as correctable error (CE). However, if 5 or more symbol errors occur, the code will be able to detect that the errors exist but will not be able to correct them. This is referred to as uncorrectable error (UE).

The ability to detect and correct errors in DRAM can extend the life of faulty DRAM while continuing to provide good ECC error detection and correction to detect additional possible faults.

For a number N ECC symbols, conventional ECC can correct up to N/2 symbol errors. The ability to provide correction for a greater number of errors would be desirable.

### SUMMARY

The technology is generally directed to detecting and correcting memory errors in a memory device, such as a DIMM or other memory device through the use of ECCs. Using metadata, the technology determines the location of random errors, which extends the number of errors that can be reliably corrected by ECC.

A method of correcting UEs in a memory device includes storing ECC information in one or more memory elements in the memory device and calculating error correction information metadata in a memory controller. The memory controller stores the metadata in the memory device. Using the metadata and the ECC, the memory controller determines a location of the memory elements containing the UE, and corrects the UE based on the ECC information and the stored metadata. When writing data to the memory device, a data value is written to a first memory element of the memory device, an ECC value is written to a second memory element of the memory device, and in the memory controller a metadata value is calculated based on the data value and written to a designated memory location in the memory device. The metadata can be stored in an on-die ECC (ODECC) storage in a DIMM. In other memory devices, the metadata may be stored in another available space associated with the memory device. The metadata may be calculated as a hash function value, such as a cyclic redundancy check (CRC) hash function, by way of example. The method further includes identifying a location of a fault in the memory device and correcting the identified fault using the stored ECC information at the identified location. Determining the location of the fault in the memory device is achieved by selecting a pair of memory elements of the memory device, assuming that the fault exists in the selected pair of memory elements, reconstructing a retrieved data value for each memory element of the pair of memory elements using the ECC information, recalculating the metadata value for each memory element of the pair of memory elements, and comparing the recalculated metadata value to the metadata originally stored in the memory device. Identifying the location of the fault in the memory device involves the recalculated metadata matching the metadata stored in the memory device and flagging the selected pair of memory elements as containing the fault, but when the recalculated metadata does not match the metadata stored in the memory device, flagging the memory element associated with a mismatch of the recalculated metadata not as the location of the fault in the memory device. Selected pairs of DRAM elements are iteratively selected from each possible pair of memory elements in the memory device and it is assumed that the fault exists in the selected pair of memory elements, data values for the pair of memory elements is reconstructed from ECC, and the metadata value for each memory element of the pair of memory elements is recalculated by the memory controller. The reconstructed and recalculated values are compared to the metadata stored in the memory device. When the correct location containing the errors is determined, the data stored in a memory element is replaced using the ECC information associated with the memory element to recreate the correct data. The technology will now be described in the context of the memory device being a DIMM. The DIMM may be a 10 x 4 DIMM where data is written to 8 memory elements of the 10 x 4 DIMM, ECC data is written to the remaining 2 memory elements of the 10 x 4 DIMM, and the metadata is written to on-die ECC (ODECC) memory space in the DIMM. Alternatively, the DIMM can be a 10 x 4 DIMM having data written to 8 memory elements of the 10 x 4 DIMM, ECC data written to 1 of the remaining memory elements of the 10 x 4 DIMM, and the metadata remaining 1 memory element of the 10 x 4 DIMM.

A memory device according to the described technology includes a first memory element for storing data values, a second memory element for storing error correction code (ECC) information, and a third memory element for storing metadata associated with the data values stored in the first memory element and the ECC information stored in the second memory element. The memory device can further include the third memory element being an on-die ECC memory resource of the memory device. The memory device may be implement implemented as a dual inline memory module (DIMM). A location of a fault in the memory device can be identified using the data value stored in the first memory element, the ECC information stored in the second memory element and the metadata stored in the third memory element. The location of the fault in the memory device can be detected by reconstructing a retrieved data value for the data value stored in the first memory element using the ECC information, recalculating a metadata value for the reconstructed retrieved data value and comparing the recalculated metadata value to the metadata stored in the third memory element.

### BRIEF DESCRIPTION OF THE DRAWINGS

FIG. 1 is an illustration of a memory device according to aspects of the described technology.
FIG. 2 is an illustration of the memory device of FIG. 1 showing an uncorrectable error according to aspects of the described technology.
FIG. 3 is an illustration of a technique for detecting and correcting uncorrectable errors in a memory device3 according to aspects of the described technology.
FIG. 4 is a process flow diagram of an example method for detecting and correcting uncorrectable errors in a memory device according to aspects of the described technology.
FIG. 5 is a block diagram of an example system for detecting and correcting uncorrectable errors in a memory device according to aspects of the described technology.

### DETAILED DESCRIPTION

The technology is generally directed to detecting and correcting errors occurring in dynamic random-access memory (DRAM) devices, such as those included in a dual in-line memory module (DIMM) or other memory device.

The technology is further directed to error detection and correction in memory devices using DRAM elements. ECC provide the ability to correct errors in memory elements. The ability to extend ECC capabilities to correct errors in defective elements is achievable when the location of the error(s) is known. Error correction metadata is calculated in the memory device when a write operation is performed. The metadata is stored in available space on the memory device. To locate uncorrectable errors, a pair of elements is selected and ECC is performed to recreate the data in the pair of elements. The metadata is recalculated on the recreated data and compared to the originally stored metadata. A match in metadata indicates the chosen pair contained the error. A mismatch indicates that the recreated data does not contain the error. Locating errors extends ECC correction capability.

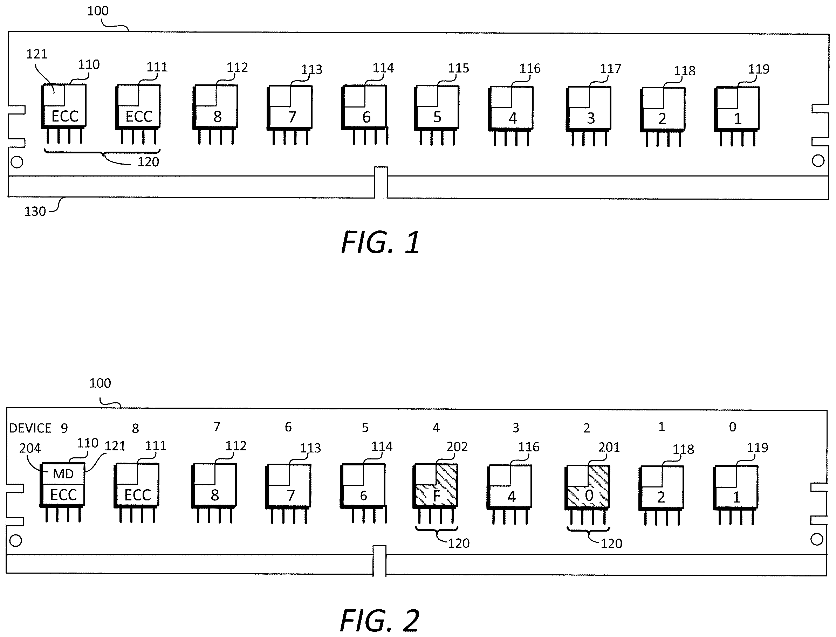

FIG. 1 provides an illustration of a memory device 100 according to aspects of the described technology. The memory device 100 is represented as a DIMM in FIG. 1. The DIMM is configured as a 10 x 4 DIMM, having 10 DRAM devices 110-119, with each DRAM device 110-119 having four leads or DQs 120. Interface 130 provides electrical connections that electrically connect and communicate with a socket in a host machine containing the memory device 100.

Memory device 100 receives a write data request, which is processed by the memory manager (not shown). The memory manager writes the data to the DRAM devices 110-119. In this example, device 119 stores the value 1, device 118 stores the value 2, device 117 stores the value 3, device 116 stores the value 4, device 115 stores the value 5, device 114 stores the value 6, device 113 stores the value 7, and device 112 stores the value 8. Device 110 and device 111 store information relating to ECC for detecting and correcting errors that may occur in the DRAM devices 110-119.

Each DRAM device 110-119 can include an on-die ECC (ODECC) resource 121 for providing ECC functionality. In some memory devices 100, other space may be available for storing ECC information. In conventional memory device applications, ECC may be performed using RS codes. RS codes are capable of correcting errors occurring in a number of output leads 120 equal to one half of the number of output leads 120 provided for ECC. In the example of FIG. 1, two DRAM devices 110, 111 contain ECC information. The two DRAM devices 110, 111 have 4 output leads providing 8 total output leads 120 for ECC. Accordingly, up to 8/2 = 4 output lead errors can be detected and corrected, which is equivalent to one full defective DRAM device 110-119 (or chip), when the location of the fault is not known. The ability to correct up to eight faulty outputs 120 (equal to the number of ECC outputs 120) can be achieved where the locations of the errors are known.

By way of example, consider a Reed Solomon code RS(40, 32, 16). This code denotes:
- 16 bits per symbol;
- 32 data symbols; and
- nECC = number of ECC symbols = 8 ECC symbols.
- Code RS(40, 32, 16) has the following capability:
- detect and correct up to nECC/2 (8/2 = 4) erroneous symbols, provided the location of the symbol errors is unknown.
- detect and correct up to nECC (e.g., 8) erroneous symbols, assuming the locations of the symbol errors are previously known. This is referred to as erasure code capability.
- combinations of unknown and known location can be handled, assuming k known errors, k ECC bits are used to correct these known location errors, leaving the code with the capability to detect and correct up to (nECC-k) / 2 symbol errors in unknown locations, referred to as random error.

Examples described throughout this disclosure describe DDR5 generation DRAM devices. This is provided by way of example and does not limit the scope and applicability of the described systems and methods. The concepts described herein may be used in other memory standards and configurations.

In DDR5 DRAM devices, each DRAM device typically has 4 or 8 output pins (DQs). DQs drive data upon request. For the sake of example, it is assumed that each device has 4 DQs, denoted as x4. By way of example, a DIMM having a 10 x 4 configuration includes 10 DRAM devices, each device having 4 DQs. By way of example, for the purpose of this description a 10 x 4 DIMM will include 8 devices for storing data and the remaining 2 devices for storing ECC information. With each device having 4 outputs (DQs) the DIMM in this example will include 32 data symbols (8 devices x 4) and 8 ECC symbols (2 devices x 4).

A fault condition is assumed where 1 device is faulty and all of its DQs have symbol errors. When a full DRAM device, all 4 DQs are faulty, the condition is called a "Chipkill". In the example above having 8 ECC symbols, a chipkill can be corrected as the 4 faulty symbol meets the limits of the ECC correction rate of 8/2 = 4 symbols. However, if 2 DRAM devices are faulty (a double chipkill), the resultant 8 symbol errors cannot be corrected using a standard RS ECC flow.

Referring now to FIG.2, an illustration of the memory device 100 of FIG. 1 containing an uncorrectable error is shown. In FIG. 2 it can be noted that the value stored in device 2 201 has been corrupted and contains a value of 0, as opposed to the value 3 that was provided when the data was originally written. Similarly, device 4 202 has been corrupted storing a value of F instead of the value 5, which was written at the original write request. The errors associated with device 2 201 and device 4 202 involves eight faulty output leads (120). Because the number of faulty output leads 120 is greater than nECC/2 defining four output leads, this error is a UE as originally the location of the errors is not known.

The technology described herein utilizes additional metadata 204. In memory devices compliant with DDR5 and later, on-die memory 121 for storing ECC information is included as part of the standard specification. Future generations may include additional storage for metadata 204 to become available. Further options for creating additional metadata in addition to on die storage may be considered.

Metadata 204 includes pieces of additional information that is written and/or read together with the actual data linked to the underlying data. In some case, the metadata 204 may be written or retrieved at a different time than the read or write request for the data, with the metadata 204 being associated with the corresponding data. Metadata 204 may be stored using the ODECC space 121, or other storage space that may be associated with the DRAM devices 110-119.

A technique for correcting a double chipkill using additional metadata will now be described. Metadata is produced when data is originally written to the DRAM. The metadata is stored at the same time the data is written to the DRAM device. For example, metadata generated at the time data is written may be stored in the area typically used for on-die error corrections codes (ODECC). The metadata is written to the ODECC area instead of ECC information. The memory controller may compute the metadata. Metadata may be the output of a function applied to the actual data (Data + ECC). The function used may be a cyclic redundancy check (CRC) such as a CRC16 or CRC32 by way of example. The metadata may be computed from a hash function, including CRC or another hash function.

In a first step, the detection of a UE is performed. A UE decoder starts by assuming that two of the DRAM devices are defective. The decoder then evaluates each possible pair of DRAM devices. In a 10 x 4 DIMM, for example, device 1 is selected to pair with device 2, then device 1 is paired with device 3, and sequentially device 1 is paired with the next device through device 10. Subsequently device 2 is paired with device 3, then device 4 and so on through device 10. Each device 1-9 are sequentially paired with the remaining devices, resulting in 45 options in a memory device having 10 DRAM devices. The decoder may process some or all of the possible pairs in parallel.

For each selected pair of devices assumed to be faulty, the decoder applies the associated erasure code on the selected pair of devices. Applying the erasure code recreates the data based on the assumption that these two devices are defective. Using the recreated data, the metadata hash function (e.g., CRC32) is recalculated for the reconstructed device data.

The newly computed metadata based on the data recreated by the ECC is then compared to the original metadata that was calculated when the original data was written. If the metadata based on the recreated data matches the originally calculated metadata, this would indicate that the reconstructed data is correct with almost 100% certainty. In this case the selected device data is selected as being correct. In a case where the data recreated by the ECC and the recalculated metadata does not match the metadata as originally written, this indicates that the currently selected pair of DRAM components do not represent the detected error. If all possible pair combinations are recreated and the resulting metadata does not match the original metadata, then it is possible that the fault in the DIMM affects more than just a double chipkill, although this occurrence would be rare.

By identifying the two DRAM components that are exhibiting errors, the location of the errors becomes known, and the ability to correct the errors using ECC becomes equal to the number of ECC components (nECC). This technique allows for increased ability for error detection and correction over conventional approaches.

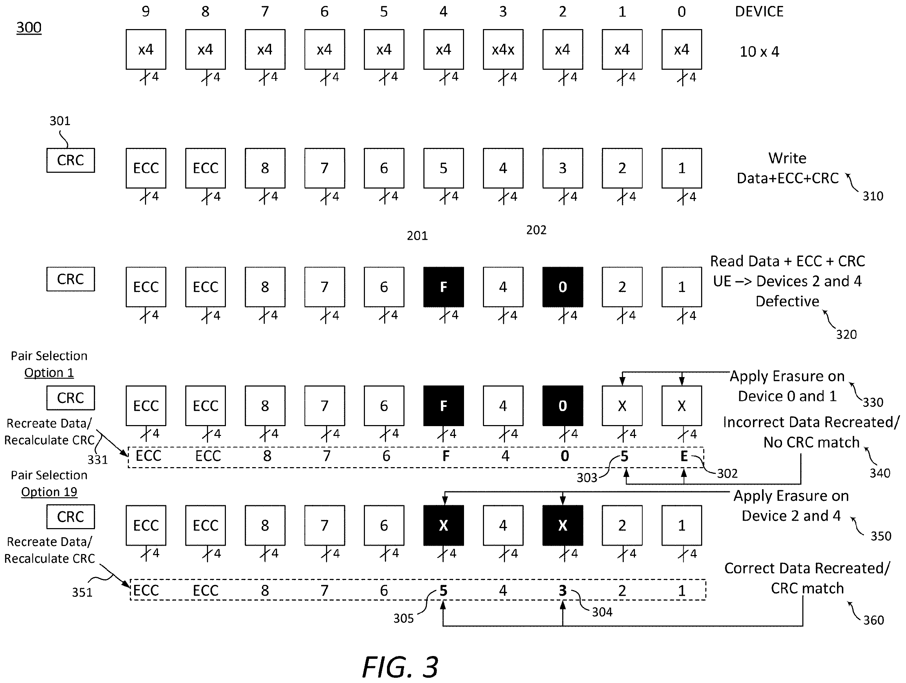

FIG. 3 is a diagram illustrating a technique 300 for detecting and repairing a double chipkill error according to the described technology. At stage 310, data is written to the memory device. The memory device includes 10 DRAM devices. Eight of the devices (device 0-7) contain data and two of the DRAM devices (device 8 and 9) contain ECC information. Metadata, such as a hash function like CRC 301 is calculated based on the received data. The data, ECC information, and metadata 301 are written to the memory devices. For illustrative purposes, the values written to DRAM devices 0-7 correspond to the values 1-8, respectively. At stage 320, the data is read, and a data error is detected. In this example, device 2 202 and device 4, 201 are defective. Because two chips are affected, this affects eight output pins, which creates an uncorrectable error. In device 2 202, the data value has changed from "3" to "0", while in device 4 201, the data value has changed from "5" to "F".

The technique 300 selects pairs of DRAM devices and assumes that the selected pair of DRAM devices are defective and causing the UE. The memory controller evaluates each possible pair combination to determine if the selected pair of devices contains the detected error. Multiple selected pairs may be evaluated in parallel. To illustrate, option 1 selects the pair of device 0 paired with device 1. First, the ECC information is used to apply data erasure on device 0 and device 1 330. The data is recreated, and based on the recreated data, the metadata (e.g., CRC) is recalculated 331. As may be seen, the erroneous data in device 2 and device 4 is used as part of the recreation of data on device 0 and device 1, causing the incorrect data to be regenerated. Device 0 produces a value of "E" 302 and device 1 produces a value of "5" 303. The CRC is recalculated based on the newly recreated data and produces a result that is compared to the CRC that was written when the data was first saved to the DIMM. The comparison results in a mismatch 340 of the metadata and the data does not match what was originally written. This mismatch is an indication that the pair selected, in this case device 0 and device 1, are not the DRAM devices creating the error.

Each possible pair is evaluated, in the example of FIG. 3 option 19 selects the pair made up of device 2 and device 4. Data erasure is applied to device 2 and device 4 350, and the data is recreated. The recreated data is used to recalculate the metadata or CRC 351. In this case, the selected pair is the correct pair that is causing the detected UE. Therefore, the ECC information correctly recreates the faulty data, placing the value "3" into device 2 304 and placing the value "5" into device 4 305. This corrected data is compared to the original data and the recalculated CRC is compared to the originally stored CRC, which results in a match 360. The matching metadata indicates the correct fault locations were identified, and the recreated data is correct. The recreated data is accepted as the correct data.

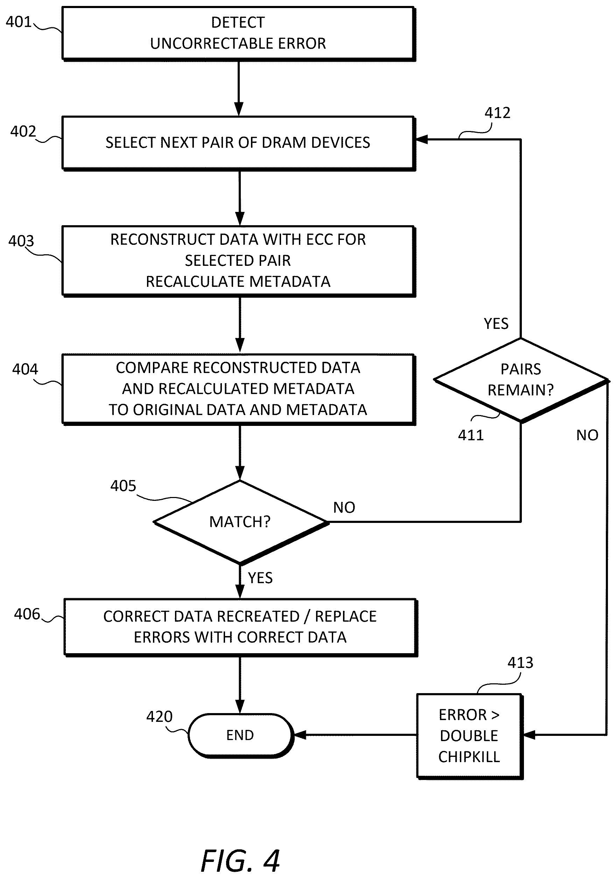

FIG. 4 is a flow diagram for detecting and repairing an uncorrectable error according to aspects of the described technology. Data stored in memory is read and a UE is detected 401. The EU can include a number of faulty DRAM device outlets that exceeds the number of errors that can be corrected by the ECC. For example, a memory device having 8 ECC outlets, can correct up to 4 errors where the location of the error is unknown. One example of a UE is a double chipkill error where two DRAM devices are faulty. This represents eight output lead errors that cannot be detected and repaired by ECC. A pair of DRAM devices are selected for testing 402. The selected pair of DRAM devices are assumed to be faulty. The ECC is applied to the selected pair of DRAM devices to reconstruct the data stored in the selected pair of DRAM devices. Using the reconstructed data, the metadata (CRC) is recalculated 403. The reconstructed data and the recalculated CRC are compared to the values originally stored when the data was written to the DIMM 404.

If the recalculated CRC matches the original CRC, then the faulty pair of DRAM devices has been correctly selected, and the corrected data is assumed to be correct 406. If the recalculated CRC does not match the original CRC value, then the assumption that the currently tested pair of DRAM devices is not the pair that is producing the error. If additional pair combinations remain to be tested 411, then the next pair of DRAM devices is selected for testing 402. If no more pairs exist to be tested, and no match has been found, then the UE may involve errors that represent more than a double chipkill error. When a match is found, or when no more possible pair combinations exist for testing, then the process ends 420.

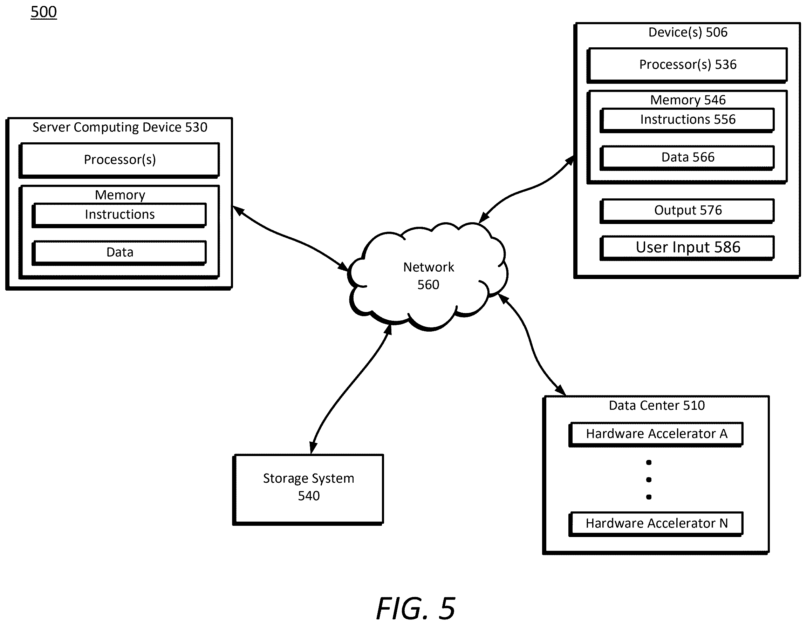

Figure 5 illustrates an example system 500 in which the features described above may be implemented. It should not be considered limiting the scope of the disclosure or usefulness of the features described herein. In this example, system 500 may include device(s) 506, server computing device 530, storage system 540, and network 560.

Each device 506 may be a personal computing device intended for use by a respective user. The device 506 may include one or more processors 536, memory 546, data 566 and instructions 556. Each device 506 may also include an output 576, user input 566, and location sensor 596. By way of example only, devices 506 may be mobile phones or devices such as a wireless-enabled PDA, smartphones, a tablet PC, a wearable computing device (e.g., a smartwatch, AR/VR headset, smart helmet, etc.), a netbook that is capable of obtaining information via the Internet or other networks, or a smart home device, such as a home assistant, smart thermostat, smart doorbell, smart light, etc.

Memory 546 of device 506 may store information that is accessible by processor 536. Memory 546 may also include data that can be retrieved, manipulated or stored by the processor 536. The memory 546 may be of any non-transitory type capable of storing information accessible by the processor 536, including a non-transitory computer-readable medium, or other medium that stores data that may be read with the aid of an electronic device, such as a hard-drive, memory card, read-only memory ("ROM"), random access memory ("RAM"), optical disks, as well as other write-capable and read-only memories. Memory 546 may store information that is accessible by the processors 536, including instructions 556 that may be executed by processors 536, and data 566.

Data 566 may be retrieved, stored or modified by processors 536 in accordance with instructions 556. For instance, although the present disclosure is not limited by a particular data structure, the data 566 may be stored in computer registers, in a relational database as a table having a plurality of different fields and records, XML documents, or flat files. The data 566 may also be formatted in a computer-readable format such as, but not limited to, binary values, ASCII or Unicode. By further way of example only, the data 566 may comprise information sufficient to identify the relevant information, such as numbers, descriptive text, proprietary codes, pointers, references to data stored in other memories (including other network locations) or information that is used by a function to calculate the relevant data.

The instructions 556 can be any set of instructions to be executed directly, such as machine code, or indirectly, such as scripts, by the processor 536. In that regard, the terms "instructions," "application," "steps," and "programs" can be used interchangeably herein. The instructions can be stored in object code format for direct processing by the processor, or in any other computing device language including scripts or collections of independent source code modules that are interpreted on demand or compiled in advance. Functions, methods and routines of the instructions are explained in more detail below.

The one or more processors 536 may include any conventional processors, such as a commercially available CPU or microprocessor. Alternatively, the processor can be a dedicated component such as an ASIC or other hardware-based processor. Although not necessary, computing devices 506 may include specialized hardware components to perform specific computing functions faster or more efficiently.

Although Figure 5 functionally illustrates the processor, memory, and other elements of devices 506 as being within the same respective blocks, it will be understood by those of ordinary skill in the art that the processor or memory may actually include multiple processors or memories that may or may not be stored within the same physical housing. Similarly, the memory may be a hard drive or other storage media located in a housing different from that of the devices 506. Accordingly, references to a processor or device will be understood to include references to a collection of processors, devices, or memories that may or may not operate in parallel.

Output 576 may be a display, such as a monitor having a screen, a touchscreen, a projector, or a television. The display 576 of the one or more computing devices 506 may electronically display information to a user via a graphical user interface ("GUI") or other types of user interfaces. For example, as will be discussed below, display 576 may electronically display query results.

The user input 566 may be a mouse, keyboard, touch-screen, microphone, or any other type of input.

The devices 506 can be at various nodes of a network 560 and capable of directly and indirectly communicating with other nodes of network 560. Although one device is depicted in Figure 6, it should be appreciated that a typical system can include one or more devices, with each device being at a different node of network 560. The network 560 and intervening nodes described herein can be interconnected using various protocols and systems, such that the network can be part of the Internet, World Wide Web, specific intranets, wide area networks, or local networks. The network 560 can utilize standard communications protocols, such as WiFi, Bluetooth, 4G, 5G, etc., that are proprietary to one or more companies. Although certain advantages are obtained when information is transmitted or received as noted above, other aspects of the subject matter described herein are not limited to any particular manner of transmission.

In one example, system 500 may include one or more server computing devices 530 having a plurality of computing devices, e.g., a load balanced server farm, that exchange information with different nodes of a network for the purpose of receiving, processing and transmitting the data to and from other computing devices. For instance, one or more server computing devices 530 may be a web server that is capable of communicating with the one or more client computing devices 506 via the network 560. In addition, server computing device 530 may use network 560 to transmit and present information to a user of one of the other computing devices 506.

Server computing device 530 may include one or more processors, memory, instructions, data, etc. These components operate in the same or similar fashion as those described above with respect to computing device 506.

According to some examples, the server computing device 530 may be connected over the network to a data center 510 housing any number of hardware accelerators. The data center 510 can be one of multiple data centers or other facilities in which various types of computing devices, such as hardware accelerators, are located. Computing resources housed in the data center can be specified for repeated results monitoring, including identifying repeated query results, or the like.

The server computing device 530 can be configured to receive queries from the client computing device 506 on computing resources in the data center 510. For example, the environment can be part of a computing platform configured to provide a variety of services to users, through various user interfaces and/or application programming interfaces (APIs) exposing the platform services. The variety of services can include identifying content responsive to the query, determining whether query results are repeated query results, or the like. The client computing device 506 can transmit input data associated with a query. The server computing device 530 can receive the input data and, in response, identify and provide for output query results. When identifying the query results, the server computing device 530 can generate a signature for the query results. The generated signature may be compared to other signatures associated with the query results and/or historical query signatures. Based on the comparison, the server computing device 530 can determine whether the query results are repeated query results. In examples where the query results are repeated query results, the server computing device 530 can enable one or more preventative measures.

As other examples of potential services provided by a platform implementing the environment, the server computing device can maintain a variety of models in accordance with different constraints available at the data center. For example, the server computing device can maintain different families for deploying models on various types of TPUs and/or GPUs housed in the data center or otherwise available for processing.

Aspects of this disclosure can be implemented in digital electronic circuitry, in tangibly-embodied computer software or firmware, and/or in computer hardware, such as the structure disclosed herein, their structural equivalents, or combinations thereof. Aspects of this disclosure can further be implemented as one or more computer programs, such as one or more modules of computer program instructions encoded on a tangible non-transitory computer storage medium for execution by, or to control the operation of, one or more data processing apparatus. The computer storage medium can be a machine-readable storage device, a machine-readable storage substrate, a random or serial access memory device, or combinations thereof. The computer program instructions can be encoded on an artificially generated propagated signal, such as a machine-generated electrical, optical, or electromagnetic signal, which is generated to encode information for transmission to suitable receiver apparatus for execution by a data processing apparatus.

The term "configured" is used herein in connection with systems and computer program components. For a system of one or more computers to be configured to perform particular operations or actions means that the system has installed on its software, firmware, hardware, or a combination thereof that cause the system to perform the operations or actions. For one or more computer programs to be configured to perform particular operations or actions means that the one or more programs include instructions that, when executed by one or more data processing apparatus, cause the apparatus to perform the operations or actions.

The term "data processing apparatus" refers to data processing hardware and encompasses various apparatus, devices, and machines for processing data, including programmable processors, a computer, or combinations thereof. The data processing apparatus can include special purpose logic circuitry, such as a field programmable gate array (FPGA) or an application specific integrated circuit (ASIC). The data processing apparatus can include code that creates an execution environment for computer programs, such as code that constitutes processor firmware, a protocol stack, a database management system, an operating system, or combinations thereof.

The data processing apparatus can include special-purpose hardware accelerator units for implementing machine learning models to process common and compute-intensive parts of machine learning training or production, such as inference or workloads. Machine learning models can be implemented and deployed using one or more machine learning frameworks.

The term "computer program" refers to a program, software, a software application, an app, a module, a software module, a script, or code. The computer program can be written in any form of programming language, including compiled, interpreted, declarative, or procedural languages, or combinations thereof. The computer program can be deployed in any form, including as a stand-alone program or as a module, component, subroutine, or other unit suitable for use in a computing environment. The computer program can correspond to a file in a file system and can be stored in a portion of a file that holds other programs or data, such as one or more scripts stored in a markup language document, in a single file dedicated to the program in question, or in multiple coordinated files, such as files that store one or more modules, sub programs, or portions of code. The computer program can be executed on one computer or on multiple computers that are located at one site or distributed across multiple sites and interconnected by a data communication network.

The term "database" refers to any collection of data. The data can be unstructured or structured in any manner. The data can be stored on one or more storage devices in one or more locations. For example, an index database can include multiple collections of data, each of which may be organized and accessed differently.

The term "engine" refers to a software-based system, subsystem, or process that is programmed to perform one or more specific functions. The engine can be implemented as one or more software modules or components or can be installed on one or more computers in one or more locations. A particular engine can have one or more computers dedicated thereto, or multiple engines can be installed and running on the same computer or computers.

The processes and logic flows described herein can be performed by one or more computers executing one or more computer programs to perform functions by operating on input data and generating output data. The processes and logic flows can also be performed by special purpose logic circuitry, or by a combination of special purpose logic circuitry and one or more computers.

A computer or special purposes logic circuitry executing the one or more computer programs can include a central processing unit, including general or special purpose microprocessors, for performing or executing instructions and one or more memory devices for storing the instructions and data. The central processing unit can receive instructions and data from the one or more memory devices, such as read only memory, random access memory, or combinations thereof, and can perform or execute the instructions. The computer or special purpose logic circuitry can also include, or be operatively coupled to, one or more storage devices for storing data, such as magnetic, magneto optical disks, or optical disks, for receiving data from or transferring data to. The computer or special purpose logic circuitry can be embedded in another device, such as a mobile phone, a personal digital assistant (PDA), a mobile audio or video player, a game console, a Global Positioning System (GPS), or a portable storage device, e.g., a universal serial bus (USB) flash drive, as examples.

Computer readable media suitable for storing the one or more computer programs can include any form of volatile or non-volatile memory, media, or memory devices. Examples include semiconductor memory devices, e.g., EPROM, EEPROM, or flash memory devices, magnetic disks, e.g., internal hard disks or removable disks, magneto optical disks, CD-ROM disks, DVD-ROM disks, or combinations thereof.

Aspects of the disclosure can be implemented in a computing system that includes a back end component, e.g., as a data server, a middleware component, e.g., an application server, or a front end component, e.g., a client computer having a graphical user interface, a web browser, or an app, or any combination thereof. The components of the system can be interconnected by any form or medium of digital data communication, such as a communication network. Examples of communication networks include a local area network (LAN) and a wide area network (WAN), e.g., the Internet.

The computing system can include clients and servers. A client and server can be remote from each other and interact through a communication network. The relationship of client and server arises by virtue of the computer programs running on the respective computers and having a client-server relationship to each other. For example, a server can transmit data, e.g., an HTML page, to a client device, e.g., for purposes of displaying data to and receiving user input from a user interacting with the client device. Data generated at the client device, e.g., a result of the user interaction, can be received at the server from the client device.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description of the examples should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible implementations. Further, the same reference numbers in different drawings can identify the same or similar elements.

## Claims

1. A method of correcting uncorrectable errors (UE) in a memory device comprising:
storing error correction code (ECC) information in one or more memory elements in the memory device;
calculating error detection metadata in a memory controller;
storing the error detection metadata in the memory device; and
correcting an uncorrectable error in the memory device based on the ECC information and the stored error detection metadata.

2. The method of claim 1, further comprising:
when writing data to the memory device:
writing a data value to a first memory element of the memory device;
writing an ECC value to a second memory element of the memory device; and
calculating a metadata value for the data value; and
writing the calculated metadata value to a designated memory location in the memory device.

3. The method of claim 1 or claim 2, further comprising:
storing the metadata in an available storage location in the memory device; and/or wherein the method further comprises:
storing the metadata as a hash function value; and
further optionally comprising:
storing the metadata as a cyclic redundancy check (CRC) hash function.

4. The method of any one of claims 1 to 3, further comprising:
identifying a location of a fault in the memory device; and
correcting the identified fault using the stored ECC information.

5. The method of claim 4, wherein identifying the location of the fault in the memory device comprises:
selecting a one or more memory elements of the memory device;
assuming that the fault exists in the selected one or more memory elements;
reconstructing a retrieved data value for each memory element of the one or more memory elements;
recalculating the metadata value for each memory element of the one or more memory elements; and
comparing the recalculated metadata value to the metadata stored in the memory device.

6. The method of claim 5, wherein identifying the location of the fault in the memory device further comprises:
when the recalculated metadata matches the metadata stored in the memory device, flagging the selected one or more memory elements as not containing the fault; and
when the recalculated metadata does not match the metadata stored in the memory device, flagging the memory element associated with a mismatch of the recalculated metadata as the location of the fault in the memory device.

7. The method of any one of claims 4 to 6, further comprising:
iteratively selecting each possible pair of memory elements in the memory device and:
assuming that the fault exists in the selected pair of memory elements;
reconstructing a retrieved data value for each memory element of the one or more memory elements;
recalculating the metadata value for each memory element of the one or more memory elements; and
comparing the recalculated metadata value to the metadata stored in the memory device.

8. The method of claim 7, further comprising:
replacing the data stored in a memory element that is identified as containing the fault, using the ECC information associated with the memory element identified as containing the fault.

9. The method of any one of claims 3 to 8, wherein the memory device is a DDR5 dual inline memory module (DIMM) or later.

10. The method of any one of claims 1 to 9, wherein the ECC is a Reed Solomon Code; and/or
wherein the metadata is received from a memory controller.

11. The method of any one of claims 1 to 10, wherein the memory device is a 10 x 4 dual inline memory module (DIMM); and
further comprising:
writing data to 8 memory elements of the 10 x 4 DIMM;
writing ECC data to the remaining 2 memory elements of the 10 x 4 DIMM; and
writing the metadata to on-die ECC (ODECC) memory space in the DIMM; or
further comprising:
writing data to 8 memory elements of the 10 x 4 DIMM;
writing ECC data to 1 of the remaining memory elements of the 10 x 4 DIMM; and
writing the metadata remaining 1 memory element of the 10 x 4 DIMM.

12. A memory device comprising:
a first memory element for storing data values;
a second memory element for storing error correction code (ECC) information; and
a third memory element for storing metadata associated with the data values stored in the first memory element and the ECC information stored in the second memory element.

13. The memory device of claim 12, further comprising:
the third memory element being an on-die ECC memory resource of the memory device; and/or
wherein the memory device is implemented as a dual inline memory module (DIMM).

14. The memory device of claim 12 or claim 13, wherein a fault in the memory device is identified using the data value stored in the first memory element, the ECC information stored in the second memory element and the metadata stored in the third memory element.

15. The memory device of claim 14, wherein the fault in the memory device is detected by:
reconstructing a retrieved data value for the data value stored in the first memory element using the ECC information;
recalculating a metadata value for the reconstructed retrieved data value; and
comparing the recalculated metadata value to the metadata stored in the third memory element.
